# EUROPEAN PATENT APPLICATION

(11) **EP 4 686 532 A1**
(43) Date of publication of application: **04.02.2026**
(21) Application number: 25188002.7
(22) Date of filing: 08.07.2025
(51) Int. Cl.: B25J 5/00, B25J 9/00, B25J 11/00, B25J 13/08, B25J 15/04, B25J 9/16

(54) **ROBOTIC SHAPE FORMING**

(30) Priority: 29.07.2024 GB 202411039
(71) Applicant: Rolls-Royce plc, London N1 9FX (GB)
(72) Inventor: Hucker, Paul A, Derby DE24 8BJ (GB)
(74) Representative: Rolls-Royce plc

(57) **Abstract**

A robotic shaping and forming system (**10**, **40**, **50**, **81**) comprising a plurality of opposing robotic arms (**12**a, **12**b, **22**a, **22**b, **41**, **42**, **52**a-**52**h, **82**a-**82**h), a work platform (**15**, **25**, **34**, **45**, **55**, **85**) for supporting a non-planar workpiece (**11**, **21**, **31**, **44**, **54**, **63**, **73**, **84**) and a computer system, the plurality of opposing robotic arms (**12**a, **12**b, **22**a, **22**b, **41**, **42**, **52**a-**52**h, **82**a-**82**h) having multiple degrees of freedom and an end effector for holding a tool (**14**, **24**, **61**, **62**, **71**, **72**), and wherein at least one robotic arm (**12**a, **12**b, **22**a, **22**b, **41**, **42**, **52**a-**52**h, **82**a-**82**h) being mounted on a radially extending rail (**13**, **23**a, **23**b, **43**, **53**a-**53**h, **83**a-**83**h), the computer system being connected to the plurality of robotic arms (**12**a, **12**b, **22**a, **22**b, **41**, **42**, **52**a-**52**h, **82**a-**82**h), the computer system controlling the movement of the robotic arms (**12**a, **12**b, **22**a, **22**b, **41**, **42**, **52**a-**52**h, **82**a-**82**h), so that at least a pair of robotic arms (**12**a, **12**b, **22**a, **22**b, **41**, **42**, **52**a-**52**h, **82**a-**82**h) work together to shape and form the non-planar workpiece (**11**, **21**, **31**, **44**, **54**, **63**, **73**, **84**) that is mounted upon the work platform (**15**, **25**, **34**, **45**, **55**, **85**).

## Description

### FIELD

The disclosure relates to a robotic system for forming and manipulating the surface shape of a non-linear three-dimensional workpiece. The disclosure also relates to a method of using robots to form and manipulate the surface of a non-linear three-dimensional workpiece.

### BACKGROUND

Methods of forming and shaping planar linear sheets are well known. There are a number of different technologies that can be used such as hydroforming. However, hydroforming has an expensive threshold to overcome as the costs of tooling and the development mean that it requires a large number of components to be built to the same specification for it to be a viable manufacturing technique. Also, there is a long lead time for the development of the tooling and the forming parameters that mean that it is not useful for work on prototyping of components.

Multi-stage/multi-process forming can also be used, however, due to the number of stages, the number of steps and the equipment requirements, the quality of the final product is often low. Therefore, such systems cannot be used in areas where there is a requirement for precise high precision forming, such as aeronautical engineering.

New technologies have emerged regarding using robots for shaping and forming flat sheets. However, all of these systems are limited to the use of flat planar sheets which means that when trying to deform the sheet into a non-linear three-dimensional shape that strain and deformation is applied to both the shapes and the sheet material; this can have the effect of tearing or deforming some of the shapes.

Furthermore, it is highly complex to determine the shape of the component that would be required prior to the deformation of the sheets into a three-dimensional shape. This is particularly problematic for the case of cylinders or tubes, or any shapes having a curved profile.

Consequently, there is a requirement for a system that is able to shape and form the surface of a three-dimensional non-planar workpiece.

### SUMMARY

The scope of the disclosure is set out in the appended claims.

According to a first aspect of the disclosure there is provided a robotic shaping and forming system comprising a plurality of opposing robotic arms, a work platform for supporting a non-planar workpiece and a computer system, the plurality of opposing robotic arms having multiple degrees of freedom and an end effector for holding a tool, and wherein at least one robotic arm being mounted on a radially extending rail, the computer system being connected to the plurality of robotic arms, the computer system controlling the movement of the robotic arms, so that at least a pair of robotic arms work together to shape and form the non-planar workpiece that is mounted upon a work platform.

One robotic arm may be mounted on the work platform and positioned at the centre of the non-planar workpiece that is mounted on the work platform, the robotic arm being able to rotate about a central axis on the work platform.

The plurality of opposing robotic arms may be all mounted on the radially extending rails, so that the opposing robots are able to move towards the centre of the work platform and away from the work platform.

The tool mounted to the end effector may be interchangeable, and each robotic arm may be provided with a tool rack for supporting and holding different tools for the end effector.

The tool rack may also comprise a zero point, the zero point being a fixed position which the robotic arm can align itself to, so that the exact position of the end effector is known.

The plurality of robotic arms may be six degree of freedom industrial robots having a tip force of 20,000 N.

A number of sensors may be positioned on the robotic arms, the sensors being mounted along the robotic arm to track the positioning of the robotic arms, the data output from the sensors being fed back into the computer system.

The tools may be at least one of styluses, rollers, ultrasonic transducers, sensors, lasers or heat sources (e.g., plasma torches), cutting tools (e.g., drills, grinding or milling tools).

The computer system may incorporate a computer program, the computer program providing the signals to the robotic arms to move the plurality of robotic arms.

The computer program may also calculate and determine the path for the tools to take along the surface of the non-planar workpiece and the movements required by the robotic arms to form the shape, the computer program using the initial shape of the non-planar workpiece and the desired final shape of the non-planar workpiece (final component shape) to determine the steps required to shape and form the non-planar workpiece into the desired shape.

Artificial Intelligence, including machine learning, may be used to improve the determination of the steps required to shape or form the non-planar workpiece, the artificial intelligence system using data from previous forming or shaping processes to improve the steps.

Visual monitoring via a robotic vision system may be used on the shaping and forming process, the visual monitoring results being fed back into the computer system so that the artificial intelligence (for example, machine learning) can use live data to update the steps required to shape and form the non-planar workpiece into the desired shape.

Sensor data relating to the position of the plurality of robotic arms may be input into the computer system to accurately determine the position and shape of the robot and the force applied to the end effector and tool, so that a model of the steps required to shape to form the non-planar workpiece into the desired shape may be updated.

The work platform may be able to rotate about a central axis.

At least one clamp may be attached to the non-planar workpiece.

First columns may be mounted to the work platform, the first columns supporting a top plate that is positioned on the non-planar workpiece to hold it in position, the top plate having an aperture large enough for at least one robotic arm to access the non-planar workpiece via the aperture.

Second columns may be mounted adjacent to the work platform, the second columns being provided with rollers to allow the non-planar workpiece to move relative to the second columns.

Mounting features may be positioned on the work platform, the mounting features are structured to approximately the same size as the non-planar workpiece.

At least one shaped clamp may be used around the non-planar workpiece to be shaped and deformed.

According to a second aspect of the disclosure there is provided a method of shaping and forming a non-planar workpiece using the system according to the first aspect, the method comprising the steps of: a design of the desired component is created; the design is input into the computer system; the controller determines the process steps for the robotic arms to shape and form the non-planar workpiece; the process is converted into a series of command signals to be transmitted to the robotic arms to carry out the operation; the non-planar workpiece is placed into the working area between the robotic arms; and the command instructions are outputted to the robotic arms and the non-planar workpiece is shaped and formed to form a final component.

Physical information of the non-planar workpiece may be input into the controller prior to determining the process steps, the physical information may include at least one of: physical dimensions, physical properties of the material such as hardness and strength of the material, temperature of the non-planar workpiece.

Sensor data relating to the position of the plurality of robotic arms may be used to update the controller system in the determination of the process steps.

The controller may use machine learning, as a form of an artificial intelligence engine, the training data for the machine learning being trained by at least one of physical inspection of the physical non-planar workpiece, optical inspection of the physical non-planar workpiece during processing, optical inspection of the physical component after processing, prior manufacturing processes.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**FIG. 1** presents an example of the robotic system 10 for use with a non-planar three-dimensional workpiece;
**FIG. 2** presents a cross-sectional image of the operation of the robotic system;
**FIG. 3** presents an example of further supports (first columns, second columns) that can be used to support a non-planar workpiece;
**FIG. 4** presents another example of the robotic arm shaping and forming system;
**FIG. 5** presents an alternative example using more than two robotic arms for forming and shaping the workpiece;
**FIG. 6** shows an example of the shaping and forming process for the workpiece;
**FIG. 7** presents an alternative to the forming process shown in FIG. 6;
**FIG. 8** presents an alternative embodiment of the shaping and forming robotic arm system;
**FIG. 9** presents a flow chart of the operation of the system.

### DETAILED DESCRIPTION

Aspects and embodiments of the present disclosure will now be discussed with reference to the accompanying drawings. Further aspects and embodiments will be apparent to those skilled in the art.

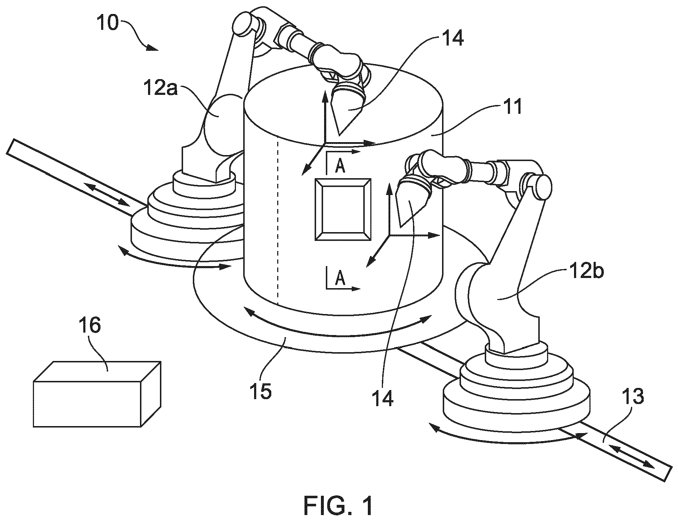

**FIG. 1** presents an example of the robotic system 10 for use with a non-planar three-dimensional workpiece 11. In this case, the non-planar three-dimensional workpiece is substantially cylindrical. The non-planar three-dimensional workpiece is substantially cylindrical because, through use of the robotic system, a shape of the non-planar workpiece may be altered from its initial shape to a final shape (final component shape). For example, the non-planar three-dimensional workpiece may initially be tubular, with a substantially circular cross-section, though due to use of the robotic system, features may be formed or machined in the wall of the non-planar three-dimensional workpiece such that the final shape (final component shape) differs to the initial shape. As is subsequently disclosed, these features may comprise at least one of indentations, protrusions and apertures in the wall of the non-planar three-dimensional workpiece.

The FIG. presents two robots (robotic arms)12a and 12b that are mounted on a rail 13 (i.e., mounted on a track 13), so that the robots are able to move in a linear relationship relative to the workpiece. The robots are robotic arms having multiple degrees of freedom. The robotic arms may be an industrial robotic arms having 6 degrees of freedom. At the end of each robotic arm is a tool 14. The tools on the end of the arms may be interchangeable to allow for different tasks to be performed, or for different shapes to be formed in the non-planar three-dimensional workpiece. The non-planar three-dimensional workpiece is mounted on a work platform 15. As shown in FIG.1, the work platform 15 is a turntable, that can be rotated relative to the position of the robots. This configuration means that the robots and the workpiece are capable of being moved relative to each other, such that the entire surface of the workpiece can be worked on by the robotic system. It will be understood though, that though it may be beneficial to be rotatable (a turntable), this is not essential for all geometries of workpiece. FIG. 1 further represents a discrete structure "A" that has been formed on the surface of the workpiece. As can be seen from the FIG., each of the heads on the robotic arms is able to move in the X, Y and Z directions, whilst the bodies of the robot can move along the rails in a linear direction. The robotic arms may also be mounted to rotatable platforms, so that they are able to rotate in a clockwise and anticlockwise direction. The separate tool heads for the robotic arms may be held on a tool rack 16 that the robots can use to change their tool heads during processing of the non-planar workpiece. In order to form the non-planar three-dimensional workpiece a flat sheet may have been deformed and joined, by welding, or other similar techniques.

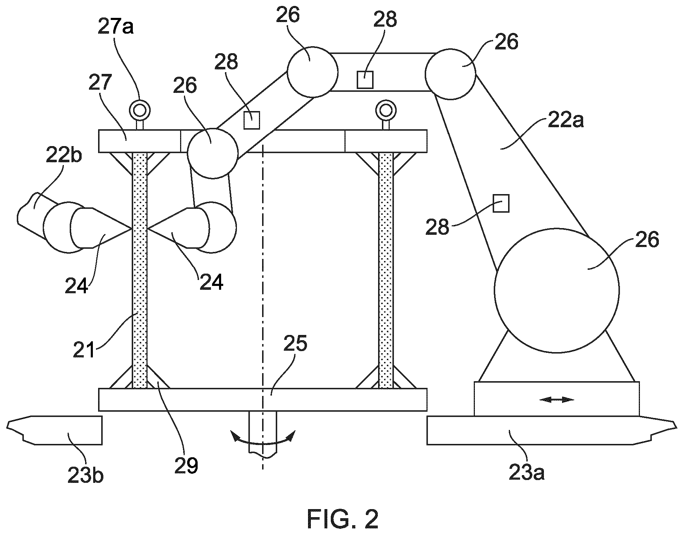

**FIG. 2** presents a cross-sectional image of the operation of the robotic system. In this, the robotic arms 22a and 22b are mounted on different rails 23a and 23b. However, in other examples, the robotic arms may share the same rail; this could pass under the workpiece. The rails are used so that the robotic arms can be moved closer or further away from the workpiece or to change the angles within the robotic arm to assist with access of the robotic arm to a certain point, so that a task can be performed. FIG. 2 only presents one robotic arm in detail, the right-hand arm 22a, whilst only showing the head of the left-hand robotic arm 22b. The points of articulation 26 of the robotic arm 22a are shown, these allow the angles between the relative sections to be changed; this increases the points which the tools 24 can access for processing of the workpiece. The non-planar three dimensional workpiece 21 is shown clamped by clamps 29 to the turntable work platform 25 to maintain it in position whilst the shaping and forming tasks are being performed on it. The workpiece is also shown clamped by clamps 29 to a top plate 27. In the FIG, the top plate additionally comprises lifting eyes 27a; these lifting eyes allow the top plate and workpiece to be easily lifted onto the work platform, thus allowing for easier forming and shaping of large non-planar workpieces. In the FIG, the robotic arms have forming tools attached to them. Depending upon the nature of the task the forming tools can be changed to different tool types, such as cutting tools for making apertures within the non-planar three-dimensional workpiece. The robotic arms may be configured to be able to change the tools based on commands from an operator or controller (for example, a computer system comprising a computer program). The tools can be stored in a tool rack within the operating space, but to one side of the main operation of the system and changed during operation to allow a different function to be performed. The tool rack may have a fixed zeroing point for the arm, so that it is able to determine the orientation and position from this point. The robotic arms may also feature a range of sensors 28 such as visual, laser, tactile etc. These sensors can be attached around the tools on the robotic arm, so as to provide real time sensing capability for the control system, improving the dimensional conformity of the non-planar three-dimensional workpiece. The robotic arms are configured such that they can reach any position along the length (or height in its attached configuration) of the workpiece. The robotic arms are also configured with a highly articulatable end joint, so they can orient their tool to the workpiece as required. In addition to the flexibility of the robotic arms the turntable and, therefore, the workpiece can be rotated around a central axis. This rotation allows for the robotic arms to be able to reach all the points on the workpiece. The position of the robotic arms on the rail, the rotation of the turntable, and the position and orientation of the tools (on the end of the robotic arms) are controlled by a controller (for example, a computer system comprising a computer program) and can be pre-programmed from a desired Computer Aided Design (CAD) geometry. The controller can adapt the signals to the robotic arms and to the tools based upon feedback from a range of sensors attached to the robotic arm and also from any camera systems that are mounted around the work platform. This increases the accuracy of the processing and also increases the quality (dimensional conformance) of the final component. Rather than using a clamp, a range of means could be employed to attach the workpiece to the turntable, for example, welding, radial bolts through holes in the workpiece to an internal or external flange on the turntable with corresponding holes, or a flange turned in the workpiece 90 degrees to the central axis that sits on the turntable and bolts through holes in the workpiece flanges through corresponding holes in the turntable. In addition to attaching the workpiece to the turntable other attachments may be made. For example, the top plate 27 attached to the top of the workpiece may provide the same or similar level of radial restraint to the workpiece as the turntable. The top-plate may be in the form of a ring (or plate with a central hole) such that at least one robotic arm may reach through to access the inside of the workpiece. The top-plate may be attached to the workpiece by a similar means as the workpiece is attached to the turntable.

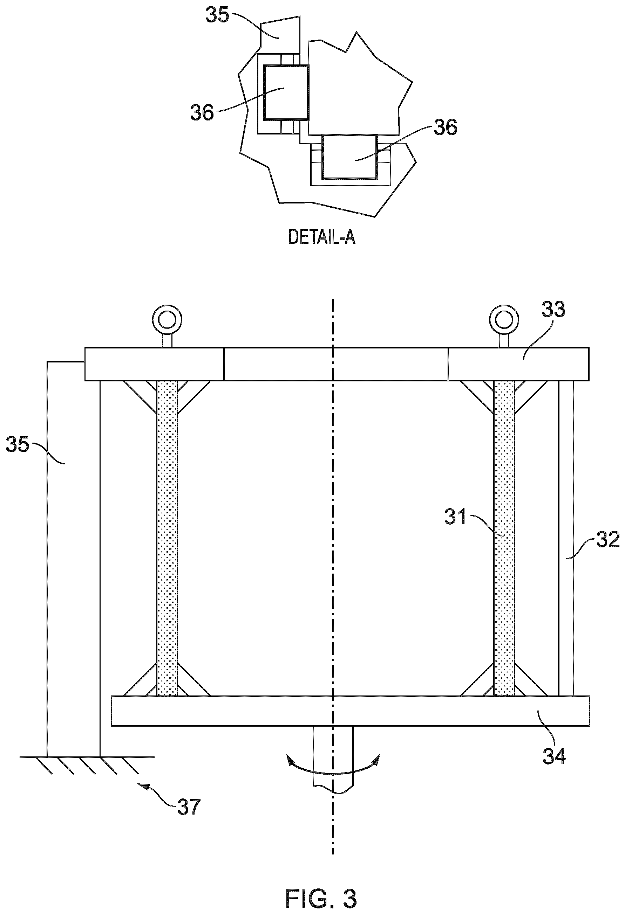

**FIG. 3** presents an example of further supports that can be used to support a non-planar three-dimensional workpiece 31. In this example, around the workpiece are placed first columns 32 that support a top plate 33 that is attachable to the non-planar workpiece (only one first column is shown in FIG. 3). The first columns 32 are placed radially outboard of the workpiece on the work platform 34 and do not interfere with the access of the robotic arm (not shown in the FIG) to reach the workpiece 31. An additional or alternate second column 35 is shown extending from the surface 37 at the side of the turntable work platform and extending to the top plate 33. Although FIG. 3 shows a single column 32 and a single second column 35, multiple first columns 32 and multiple second columns 35 may be used. If multiple columns are present, these may be arranged around the work platform. For example, multiple first columns may be symmetrically arranged around the work platform; multiple second columns may be symmetrically arranged around the work platform. The top of the second column 35 has a series of orthogonally offset rollers 36 with associated bearing arrays (enlarged in offset image, labelled "Detail-A"). The specific requirements for the support and column configurations would, as the skilled person would appreciate, depend on both or either; the relative stiffness of the workpiece - high aspect ratio (diameter to length) workpieces could be more prone to loss of end concentricity during forming - and secondly the depth and number of any hoop continuous forms (such as ribs) which draw material from axial to radial and without restraint would shorten the length of the workpiece through material draw. Consequently, the requirements and need for columnar support of the workpiece will depend upon the task that is being performed.

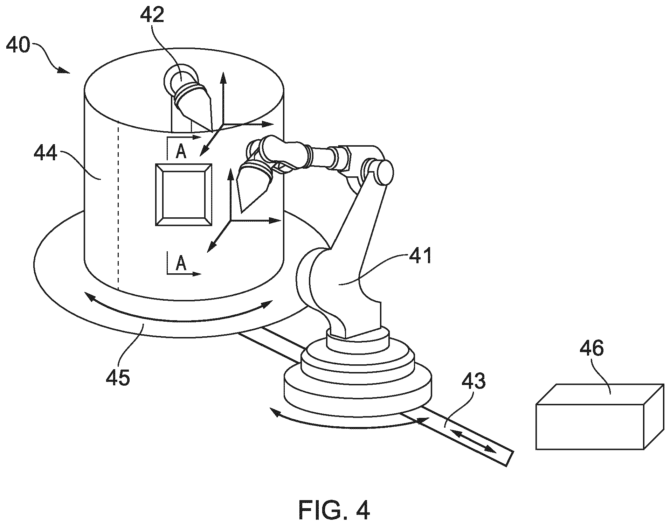

**FIG. 4** presents another example of the robotic arm shaping and forming system 40. In this FIG., only one of the robotic arms 41 is mounted on a rail 43 to provide it with motion towards and away from the workpiece. The second robotic arm 42 is placed at the centre of the non-planar workpiece 44; this is opposite the robotic arm on the rail. The workpiece may be mounted on a turntable 45, so that it is able to rotate relative to the two robotic arms. This may be achieved by having a split mounting with the centre fixed and a rotating outer portion onto which the workpiece can be mounted. Alternatively, the entire work platform may be a turntable and the robotic arm 42 is able to rotate relative to the work platform 45. Such configurations are desirable for large workpieces, where a robotic arm can readily fit inside and provide for more controlled shaping and forming. It also allows for the shaping and forming of a closed sided workpiece, i.e., a cylinder with a base. In such cases the closed sided workpiece can be placed over the robotic arm on the work platform and then fixed in position before the shaping and forming operation is able to begin. The internal robotic arm may have fewer degrees of motion than the external robotic arm, thus allowing it to be used in a more restricted space than that of the external rail mounted robotic arm. The internal robotic arm may be mounted on a post that can also be used to support the workpiece and prevent it from unexpected and unwanted buckling. The post may be static and extend through a central aperture in the turntable such that turntable rotates about it. Alternatively, the post may connect to the work platform and may rotate with the work platform. A further support may be used with or without the presence of the post. The support may have a series of apertures or cut-outs that correspond to the desired position of features that are to be shaped or formed into the workpiece. These features will allow the internal robotic arm to pass through, so that it can work on the workpiece. Tool racks 46 may be mounted close to the robots to allow them to change the tool end effectors for the robots.

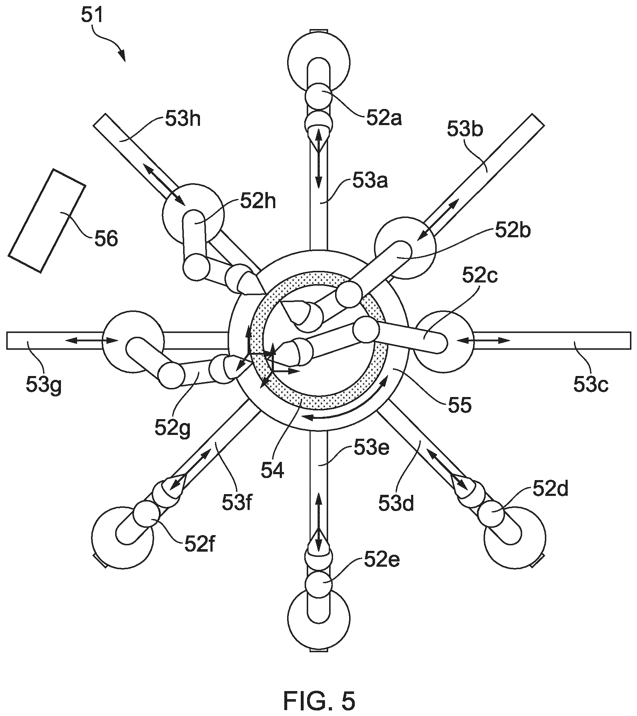

**FIG. 5** presents a plan view (viewed from above) of an alternative example using more than a single pair of opposing robotic arms for forming and shaping the workpiece. In this example, the robotic shaping and forming system 51 is presented having 4 pairs of opposing robotic arms 52a,b,c,d,e,f,g,h, all of which are mounted on rails 53a,b,c,d,e,f,g,h respectively. The rails and the robotic arms are around the periphery of the non-planar workpiece 54. The rails allow the robots to move in and out of the area around the workpiece. The robots can be operated as pairs, so that the opposite robots are the ones providing the opposing forces. Alternatively, another robotic arm may be used to apply the opposing forces. In the image, the workpiece is shown mounted on a work platform 55. The work platform may be a rotatable turntable. The opposing robots may have the same tool on the end, whilst neighbouring robotic arms may have different tools. Such a configuration means that different robots can be used to perform different tasks associated with the shaping and forming of the workpiece. If this is done in conjunction with a turntable it allows the workpiece to rotate between different tools, so that the different processes can be performed. The movement of the turntable and the tools can be programmed to move in an optimised way to increase the efficiency of the processes. The FIG. shows that more than one of the robotic arms may be able to be used together. The ability of more than one pair of robotic arms to operate at the same time allows for a faster processing of the workpiece. Such a configuration would be better suited to a larger workpiece where the robotic arms have more space to operate together. A tool rack 56 or tool racks may be positioned around the system, so that the robotic arms can change the different tools.

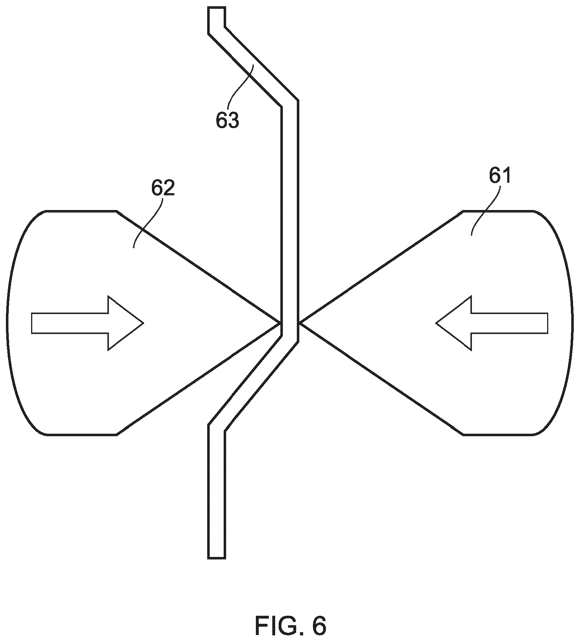

**FIG.** 6 shows an example of the shaping and forming process for the workpiece. The FIG. presents a cross section of the tools of two opposing robotic arms contacting the body of the workpiece. The radially outer robotic arm tool 61 is shown pushing against the outer side of the workpiece 63, whilst the radially inner robotic arm tool 62 is shown pushing against the inner side of the non-planar workpiece 63. The forces applied to the tools may be non-equal, so one tool is able to deform the workpiece in a particular way whilst the other pushes against the opposite side to prevent over deformation. The control and limiting of the forces are performed by a controller (for example, a computer system comprising computer software (i.e., a computer system comprising a computer program), which controls the movement of the robotic arms and the tools attached to them. The deformation forces are controlled to primarily be lower than the tearing limit for the workpiece material, however, the deformation forces may be regulated to control the level of localised thinning of the workpiece. The deformation is limited by accurately controlling the location of the opposing pressure and limiting tool tip. The robotic arms can alternate between their operation between providing the pressure or limit functionality. The FIG. shows the deformation of the workpiece towards the outside of the workpiece. The shape, size, angle and curvature of the deformations are defined by the shape and size of the tool that is used to form them as well as the pressure that is applied to the inner and outer sides of the walls of the workpiece. Thus, by varying the tooling and the forces various shapes and deformations can be formed on the workpiece.

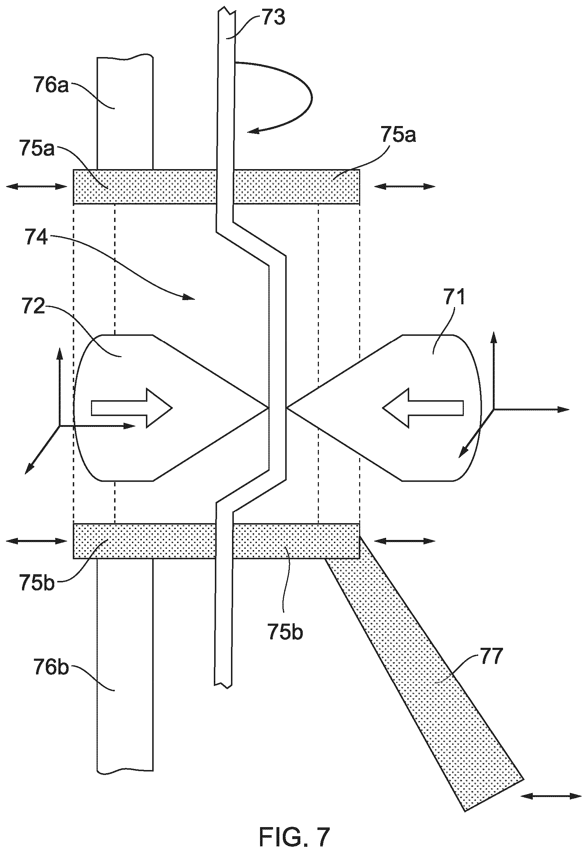

**FIG. 7** presents an alternative to the forming process in FIG. 6. In FIG. 7, all the features are to be created in the same lateral band 74, therefore, a support structure comprising clamps 75a and 75b has been added around the non-planar workpiece 73. The use of clamps 75a and 75b prevents further deformation of the workpiece during the forming and shaping process. The clamps are connected to a pair of supports 76a and 76b that extend along the inside of the workpiece. The inner tool 72 and the outer tool 71 pass between the clamps to access the region that deformation is desired. In some examples, clamping does not require the presence of two clamps and either a lower clamp 75b or an upper claim 75a may be used. The clamps of FIG. 7 are shown formed in two sections: an inner clamping section and an outer clamping section. The lower outer clamp section is shown being attached to a support arm 77. Though not shown in the FIG, a similar arrangement may be used to attach the upper outer clamp section. The clamps are used to apply a pressure to the workpiece around the location of the discrete shape being formed. The pressure and friction would be such to restrain the sheet material outside the clamp from thinning or associated effects of the forming of the desired form within the clamps. Additional means may be provided to augment the restriction of the sheet material around the perimeter of the clamps; this could be achieved using increased surface roughness of the clamp contact face, electro-magnets, suction, high friction coatings on the frame contact area, or any other such means imaginable. The at least one clamp could be retractable, so as to not be in place when not required, and to allow the workpiece to rotate and robotic arms to freely move. The clamps may be fixed to supports attached to and turntable, so that the workpiece and the clamps can rotate as one.

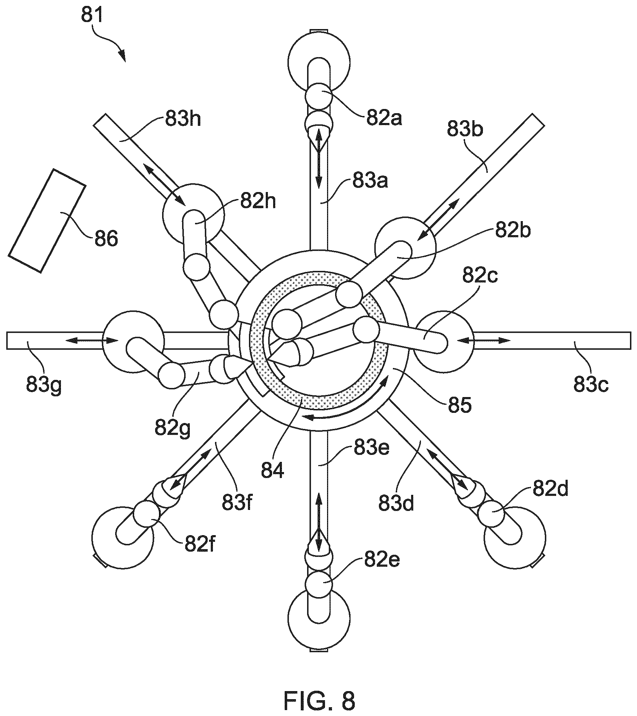

**FIG. 8** presents a plan view of an alternative embodiment of the shaping and forming robotic arm system 81. In this case there are multiple robotic arms operating around the non-planar workpiece 84. In this case, similar to FIG. 5, there are 8 robotic arms 82a,b,c,d,e,f,g,h, working as 4 pairs, mounted on rails 83a,b,c,d,e,f,g,h respectively. In this FIG., two of the robotic arms are shown having the forming and shaping tools present 82c and 82g. The other two robotic arms 82b and 82h are shown touching the workpiece to act as support structures. The support structures act as a clamp and are used to push against the inner wall and the outer wall of the workpiece as the shaping and forming process is being carried out. The support structure can be shaped to represent the shape of the workpiece and cover a section of the perimeter of the section. The support structures are used to apply a pressure to the workpiece around the location of the discrete form being formed. The pressure and friction would be such, so as to restrain the sheet material outside the support structures from thinning or associated effects of the forming of the desired form within the support structures. Thinning of the workpiece is not desirable as it can result in weakness in the finished component that could result in failure in its desired task. Such support structures can be added to the tool rack, so that they can be interchanged with working tools. This allows for a controlled process that can be performed within a fixed order, without the need for operator interference with the process. This reduces the amount of time that is spent on manufacturing and shaping the component. In some cases, only one support structure may be used; this is supported by a single support structure mounted to a robotic arm. This support structure may be mounted on the inside or the outside of the workpiece. The choice of inside or outside may depend upon the shape of the workpiece and the direction of the shaping and the forming of the desired process. The non-planar workpiece is shown mounted on a work platform 85. A tool rack 86 is present to allow the robotic arms to change the tools. Instead of having a single tool rack, each robot may be provided with its own tool rack.

The rails that the robots are positioned on are radially aligned with the non-planar workpiece to be worked on. For example, if the non-planar workpiece is a cylinder, then the rails are directed to the centre of the cylinder. The robots sit upon carriages on the rails. These carriages sit on wheels that can move along the rails. The wheels can be controlled by an electronic motor. An encoder may be used to accurately determine the position of the robot along the carriage. Alternatively, the robot may be fixed to the rails and the rails may move relative to the non-planar workpiece to allow the robots to move closer or further away from the non-planar workpiece.

The system is connected to a controller. The controller is used to receive the desired geometries of the finished component. With this information, the controller determines a series of control signals for the robotic arm and the tool to be able to form the component as required by the desired geometry. The control signals are able to be applied to each of the robotic arms as being used. The controller may use machine learning to determine the signals; this may be done through a series of forming steps so that once a number of components are made the quality and accuracy of the component can be assessed and the information fed back into the system to train the controller regarding the control signals. Simulators of the process may be used as well as or instead of the inspection, as can sensor data from the robotic arms. The control signals defining at least one of the following: paths that the tool will take, angle of the tool, forces applied by the robotic arms to the tools at the end of the arms, a desired start and end position of the end effector for each step, the speed at which the tool passes over the surface of the workpiece, the number of repeat paths that are required to form a certain deformation. The controller may also determine when tool end effectors should be changed for different tasks. Such control signals tell the arm to return to the tool rack and swap the end effector for another. The controller may also send a signal to move the robotic arms to a zeroing position, so that the accuracy of the movements of the robotic arms is increased. The controller may be able to adjust the program instructions on the fly, that is to say that using the sensor data to update the model after each path, so that the accuracy of the final component is increased. The controller may be a computer system that is able to couple with and provide signals to the robotic arms in the system.

The controller may receive a design of the required component. From this it may use physical simulations and modelling to determine the optimum path and sequence to shape and manipulate the workpiece to form the overall component. The controller may also determine a number of intermediate shapes and forms that the workpiece should achieve in order to get to the final component. From these various stages can be determined. Once the controller has determined the paths and sequences the tools and end effectors. These can be input into a series of commands that can then be transmitted to the robotic arm. As discussed above, the commands may be fixed, or may be updated based upon the information provided by the sensors. If real time monitoring is used, then the optimization may be carried out at every step to get to the final shaped and formed workpiece. The model may also be used to determine the effect of treatments to the workpiece, for example the effect of heating the area for the working or ultrasonic processing of the area prior to working with the other tools.

The sensors that may be used are encoders on the arms and joints of the robotic arms. Strain gauges may be used on the end effectors. These may be used to provide feedback on forces and their balance, so that the correct deformation can be created. Optical sensors and visual tracking of the robotic arms may also be used to monitor both the position of the robotic arms as well as for the shape of the non-planar workpiece as the shaping and forming process have been completed. Sensors may be coupled to the workpiece to be worked and shaped. Such sensors may be temperature sensors, strain gauges and other suitable sensors to monitor properties of the workpiece being worked on.

There are a number of different tools that may be used as the end effector on the robotic arm. Such tools include styluses, rollers, ultrasonic transducers, sensors, lasers or heat sources (e.g., plasma torches), cutting tools (e.g., drills, grinding or milling tools). The system may have a number of styluses and rollers, each having different sizes and radii so that the path drawn across the workpiece by the tool or end effector causes different finer or coarser ranges of deformation of the workpiece. The roller may be able to roll in only one direction or may be able to move in multiple axes. There may be different rollers within the tool rack to allow the part to be shaped in any suitable way. The robotic arms may be high force industrial robotic arms, such arms can apply high levels of force e.g., 20,000 N. The level of force that is applied will depend on the material properties and the thickness of the material and the time required for the process. The controller may output a series of instructions to the arms to change the tools. In such a case the arm is instructed to move back to a position on the tool rack, then to release the tool into a defined position, before attaching a new tool on to the robotic arm. With the new tool attached the arm is moved into position relative to the non-planar workpiece to perform the required task or tasks. The task may be a set of fixed instructions. As such, the tooling provided for the robotic arms allows for all the shaping and forming of the non-planar workpiece.

The robots are configured to work in conjunction, but opposite each other. The use of two opposing robots reduces the global deformation of the non-planar workpiece and allows for only a localised deformation of the non-planar workpiece. It also reduces damage to the non-planar workpiece, such as puncturing of the workpiece. However, the use of opposing robots provides issues with determination of the path of the tools and the holding of the workpiece in place. In planar systems, clamping of the non-planar workpiece to maintain it in position and relative shape are easier as the effects of curvature on the paths of the tools for both of the arms when deforming the non-planar workpiece during the shaping and forming of the component are not as complex. Also, no issues for access are present as a planar sheet can be readily positioned between the robots, whereas in the case of complex shaped workpieces the arms have to be able to reach all areas, so the non-planar workpiece moving relative to the arms assists with this. As well as equipping with arms that are configured and dimensioned about the shape of the non-planar workpiece, so that they can reach over the sides of the non-planar workpiece if needed.

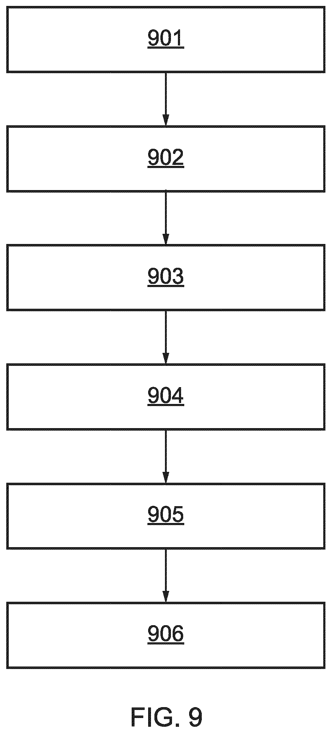

A flow chart of the operation of the system is presented in **FIG.** 9. A design of the desired component is created in step 901. The design can be created on any suitable computer utilising design software. The design can then be output as a coordinate system that the workpiece of the component is aiming to form. In step 902 the design is input into the computer system controller. The controller also takes as input a series of parameters (for example, geometry) relating to the workpiece to be shaped. The controller determines the difference between the coordinates of the workpiece that is to be shaped and that of the final component. In step 903 the controller determines the process steps for the robotic arms to shape and form the workpiece to adopt the shape of the desired component. From the coordinate difference the controller can use physical modelling of the workpiece and the tooling and processing of the workpiece to shape and form the workpiece. If heating and/or ultrasonic processing are used, the effect of this can be added into the model to allow for the correct calculation of the processing steps. This may be an iterative process to determine the minimum number of processing steps that need to be done to shape and form the workpiece as required. If more than two robots are used in the system, the calculations and determinations can use this in a step minimising optimisation to utilise all the arms to perform the task; this may also include rotation of the turntable supporting the non-planar workpiece if used. Machine learning may be used from previous processes to teach the controller to achieve the best possible sequence of tool movements to carry out to form and shape the non-planar workpiece without damaging the final component. In step 904 the process is converted into a series of command signals to be transmitted to the robotic arms to carry out the operation. The non-planar workpiece is placed into the working area between the robots in step 905. In step 906 the command instructions are outputted to the robotic arms and the component is shaped and formed. If sensors and real time monitoring are used the data may be fed back into step 903, so that the modelling and the determination of the movement steps are recalculated based upon the data received. Additionally or alternatively, the final component may undergo an assessment to determine whether the sequence of steps produces an accurate representation of the original input design. The inspection results can be fed back into the machine learning input to train the system to produce improved instructions for the robotic arms.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A robotic shaping and forming system (10, 40, 50, 81) comprising a plurality of opposing robotic arms (12a, 12b, 22a, 22b, 41, 42, 52a-52h, 82a-82h), a work platform (15, 25, 34, 45, 55, 85) for supporting a non-planar workpiece (11, 21, 31, 44, 54, 63, 73, 84) and a computer system, the plurality of opposing robotic arms (12a, 12b, 22a, 22b, 41, 42, 52a-52h, 82a-82h) having multiple degrees of freedom and an end effector for holding a tool (14, 24, 61, 62, 71, 72), and wherein at least one robotic arm (12a, 12b, 22a, 22b, 41, 42, 52a-52h, 82a-82h) being mounted on a radially extending rail (13, 23a, 23b, 43, 53a-53h, 83a-83h), the computer system being connected to the plurality of robotic arms (12a, 12b, 22a, 22b, 41, 42, 52a-52h, 82a-82h), the computer system controlling the movement of the robotic arms (12a, 12b, 22a, 22b, 41, 42, 52a-52h, 82a-82h), so that at least a pair of robotic arms (12a, 12b, 22a, 22b, 41, 42, 52a-52h, 82a-82h) work together to shape and form the non-planar workpiece (11, 21, 31, 44, 54, 63, 73, 84) that is mounted upon the work platform (15, 25, 34, 45, 55, 85).

2. The robotic shaping and forming system (40) of claim 1, wherein one robotic arm (42) is mounted on the work platform (45) and positioned at the centre of the non-planar workpiece (44) that is mounted on the work platform (45), the robotic arm (42) being able to rotate about a central axis on the work platform (45).

3. The robotic shaping and forming system (10, 50, 81) of claim 1, wherein the plurality of opposing robotic arms (12a, 12b, 22a, 22b, 52a-52h, 82a-82h) are all mounted on radially extending rails (13, 23a, 23b, 53a-53h, 83a-83h), so that the opposing robots (12a, 12b, 22a, 22b, 52a-52h, 82a-82h) are able to move towards the centre of the work platform (15, 25, 34, 55, 85) and away from the work platform (15, 25, 34, 55, 85).

4. The robotic shaping and forming system (10, 40, 50, 81) of any preceding claim, wherein the tool (14, 24, 61, 62, 71, 72) mounted to the end effector is interchangeable, and each robotic arm (12a, 12b, 22a, 22b, 41, 42, 52a-52h, 82a-82h) is provided with a tool rack (16, 46, 56, 86) for supporting and holding different tools (14, 24, 61, 62, 71, 72) for the end effector.

5. The robotic shaping and forming system (10, 40, 50, 81) of any preceding claim, wherein the plurality of robotic arms (12a, 12b, 22a, 22b, 41, 42, 52a-52h, 82a-82h) are six degree of freedom industrial robots having a tip force of 20,000 N.

6. The robotic shaping and forming system (10, 40, 50, 81) of any preceding claim, wherein a number of sensors (28) are positioned on the robotic arms (12a, 12b, 22a, 22b, 41, 42, 52a-52h, 82a-82h), the sensors (28) being mounted along the robotic arm (12a, 12b, 22a, 22b, 41, 42, 52a-52h, 82a-82h) to track the positioning of the robotic arms; and data output from the sensors (28) being fed back into the computer system.

7. The robotic shaping and forming system (10, 40, 50, 81) of any preceding claim, wherein the tools (14, 24, 61, 62, 71, 72) may be at least one of styluses, rollers, ultrasonic transducers, sensors, lasers or heat sources, and cutting tools.

8. The robotic shaping and forming system (10, 40, 50, 81) of any preceding claim, wherein the computer system incorporates a computer program, the computer program providing the signals to the robotic arms (12a, 12b, 22a, 22b, 41, 42, 52a-52h, 82a-82h) to move the plurality of robotic arms (12a, 12b, 22a, 22b, 41, 42, 52a-52h, 82a-82h).

9. The robotic shaping and forming system (10, 40, 50, 81) of claim 8, wherein the computer program also calculates and determines the path for the tools (14, 24, 61, 62, 71, 72) to take along the surface of the non-planar workpiece (11, 21, 31, 44, 54, 63, 73, 84) and the movements required by the robotic arms to form the shape, the computer program using the initial shape of the non-planar workpiece and the desired final shape of the non-planar workpiece to determine the steps required to shape and form the non-planar workpiece into the desired shape.

10. The robotic shaping and forming system (10, 40, 50, 81) of any preceding claim, wherein the work platform (15, 25, 34, 45, 55, 85) is able to rotate about a central axis.

11. The robotic shaping and forming system (10, 40, 50, 81) of any preceding claim, wherein at least one clamp (29) is attached to the non-planar workpiece (11, 21, 31, 44, 54, 63, 73).

12. The robotic shaping and forming system (10, 40, 50, 81) of any preceding claim, wherein first columns (32) are mounted to the work platform (34), the first columns (32) supporting a top plate (33) that is positioned on the non-planar workpiece (31) to hold it in position; wherein the top plate (33) has an aperture large enough for the at least one robotic arm to access the non-planar workpiece (31) via the aperture.

13. The robotic shaping and forming system (10, 40, 50, 81) of any one of claims 1 - 11, wherein second columns (35) are mounted adjacent to the work platform (34), the second columns being provided with rollers (36) to allow the non-planar workpiece to move relative to the second columns.

14. A method of shaping and forming a non-planar workpiece using the robotic shaping and forming system (10, 40, 50, 81) of any preceding claim, the method comprising:
a design of the desired component is created;
the design is input into the computer system;
the controller determines the process steps for the robotic arms to shape and form the non-planar workpiece;
the process is converted into a series of command signals to be transmitted to the robotic arms to carry out the operation;
the non-planar workpiece is placed into the working area between the robotic arms; and
the command instructions are outputted to the robotic arms and the non-planar workpiece is shaped and formed.

15. The method of claim 14, wherein physical information of the non-planar workpiece is input into the controller prior to determining the process steps, the physical information including at least one of: physical dimensions, physical properties, and temperature of the component.
